Europäisches Patentamt

European Patent Office

Office européen des brevets

(11) Publication number: **0 184 923 B1**

(12) EUROPEAN PATENT SPECIFICATION

(45) Date of publication of patent specification: **04.03.92** (51) Int. Cl.⁵: **H04B 1/68**, H04B 1/62, H04B 7/005

(21) Application number: **85308784.9**

(22) Date of filing: **03.12.85**

(54) **Single-sideband communication system.**

<table>
<tr><td>

(30) Priority: **10.12.84 JP 259354/84**
**28.01.85 JP 12618/85**
**12.02.85 JP 23646/85**
**19.04.85 JP 82530/85**
**19.04.85 JP 82531/85**
**23.05.85 JP 109438/85**
**31.05.85 JP 116528/85**
**21.06.85 JP 134213/85**
**24.06.85 JP 136095/85**
**24.10.85 JP 236449/85**

(43) Date of publication of application:
**18.06.86 Bulletin 86/25**

(45) Publication of the grant of the patent:
**04.03.92 Bulletin 92/10**

(84) Designated Contracting States:
**DE GB NL SE**

(56) References cited:
**US-A- 3 508 155**

</td><td>

(73) Proprietor: **NIPPON TELEGRAPH AND TELE-PHONE CORPORATION**
**1-6 Uchisaiwaicho 1-chome Chiyoda-ku Tokyo(JP)**

(72) Inventor: **Daikoku, Kazuhiro**
**23-16, Takanodai 3-chome**
**Nerima-ku Tokyo(JP)**
Inventor: **Ogose, Shigeaki**
**16-1-103, Sekimachiminami 4-chome**
**Nerima-ku Tokyo(JP)**

(74) Representative: **Skone James, Robert Edmund et al**
**GILL JENNINGS & EVERY 53-64 Chancery Lane**
**London WC2A 1HN(GB)**

</td></tr>
</table>

EP 0 184 923 B1

INTERNATIONAL CONFERENCE - MOBILE RADIO SYSTEMS AND TECHNIOUES, York, 10th-13th September 1984, pages 27-31, IEE, London, GB; L.B. LOPES et al.: "Application of asynchronous SSB to mobile radio services"

JAPAN TELECOMMUNICATIONS REVIEW, vol. 23, no. 4, October 1984, pages 361-368, Tokyo, JP; S. MATSUMOTO et al.: "6 GHz SSB-AM radio-relay system"

REVIEW OF THE ELECTRICAL COMMUNICATION LABORATORIES, vol. 29, no. 11/12, November/December 1981, pages 1278-1294, Tokyo, JP; T. NOJIMA et al.: "Equipment design and performance of 6GHz SSB-AM system"

TELECOMMUNICATIONS & RADIO ENGINEERING, vol. 33/34, no. 12, December 1979, pages 50-53, Silver Spring, Maryland, US; E.S. GOLOVIN: "Lowest-level radio communications equipment design"

WIRELESS WORLD, vol. 78, no. 1442, August 1972, pages 358-363, Haywards Heath, Sussex, GB; G. WAREHAM: "S.S.B. on medium waves?"

**Description**

This invention relates to a single-sideband (SSB) communication system and, more specifically, to apparatus for carrying out a demodulating process of SSB signals, in which a frequency detector and an amplitude limiter can be employed.

It is desirable in radio communication that degradations caused by multi-path fading are completely removed. Therefore, modulation methods which can counter the effects of fading must be adopted. The immediate solution would be to use some form of angle modulation, such as frequency modulation (FM) or phase modulation (PM). However, the necessary FM transmission bandwidth B is approximately twice the sum of the peak frequency deviation $\Delta F$ and the highest modulating frequency $f_m$, that is $B = 2(\Delta F + f_m)$. This relation is called Carson's rule, and indicates that the FM transmission bandwidth has to be much wider than the information itself. Even if the frequency deviation is limited to zero, the necessary FM bandwidth is twice as wide as the information bandwidth, namely, $2f_m$.

Using SSB modulation, voice signals can be inherently transmitted in a bandwidth comparable to the information bandwidth. Therefore, an SSB modulation method is very useful from the view-point of a considerable saving of bandwidth. However, in SSB, the information is contained in the signal envelope. For the purpose of maintaining high quality of demodulated voice signals, an automatic gain control (AGC) circuit fast enough to follow fading must be provided. Furthermore, regeneration of the carrier is necessary for demodulation of the SSB signal. Carrier recovery is a cumbersome operation for mobile radios.

There are many transmitters exploying the SSB modulation method, but SSB signals cannot be demodulated without using a carrier regenerated in the receiver and also cannot remove amplitude variations using an amplitude limiter. In a technical paper entitled "Information in the zero crossings of bandpass signals", Bell System Technical Journal, vol. 56, no. 4, p.p. 487-510, April 1977, the author of the paper, B. F. Logan, pointed out that the signal can be reconstructed after amplitude limiting if the signal is expressed by only real simple zeros and that a full-carrier SSB signal belongs to the signal expressed by only real simple zeros.

US-A-3508155 relates to asynchronous demodulation of a full carrier SSB signal using only envelope properties.

Japanese Telecommunications Review Vol. 23, No. 4, October 1984, pages 361-368, Tokyo, JP describes an SSB radio-relay system in which a predistorter minimises intermodulation noise in the detecting band of auto distortion control pilot tones. The predistorter generates a cancelling component to cancel travelling wave tube third order distortion.

An object of the invention is to provide an SSB communication system in which the necessary radio-frequency bandwidth is comparable to the information bandwidth and in which an amplitude limiter in the receiver portion of the system can be safely used to remove amplitude degradations caused by fading. Besides removing amplitude degradations, the system of the invention provides for demodulation of SSB signals by the use of a frequency detector and an equalizer.

According to one aspect of the present invention a SSB communication system comprises a transmitter transmitting an SSB amplitude modulation signal composed of both a single sideband carrier suppressed signal and a carrier signal; and a receiver including an amplitude limiter which removes amplitude variations of the received SSB amplitude modulation signal, a demodulator connected to an output of said amplitude limiter to demodulate the SSB amplitude modulation signal, a lineariser to cancel out distortions contained in the demodulated signal, characterized in that the receiver further includes, an equalizer, which is composed of an integrator, connected to an output of said frequency detector to compensate a frequency response of a frequency-detected signal; in that the demodulator is a frequency detector; and in that the lineariser connected to an output of said equaliser comprises a Hilbert transformer providing a Hilbert transform of an input signal from said frequency detector, a multiplier providing a product of said Hilbert transformer output and the input signal, and a subtractor subtracting a second order product, derived from said multiplier, from the input signal.

In accordance with a second aspect of the present invention an SSB communication system comprises a transmitter transmitting an SSB amplitude modulation signal composed of both a single sideband carrier suppressed signal and a carrier signal; and a receiver including an amplitude limiter which removes amplitude variations of the received SSB amplitude modulation signal, a demodulator connected to an output of said amplitude limiter to demodulate the SSB amplitude modulation signal, and a lineariser to cancel out distortions contained in the demodulated signal, characterized in that the demodulator is a frequency detector; in that the receiver further includes a - 6dB/octave response equalizer, connected to an output of said frequency detector to compensate a frequency response of a frequency-detected signal; and in that the lineariser connected to an output of said equaliser comprises a Hilbert transformer providing a Hilbert transform of an input signal from said frequency detector, an adder and a subtractor providing a sum and difference between the input signal and the output of said Hilbert transformer, respectively, a multiplier providing a product of said adder and subtractor, an attenuator halving the output of said multiplier and adder providing the sum of the output of said attenuator and the input signal.

In accordance with a third aspect of the present invention an SSB communication system comprises a transmitter transmitting an SSB amplitude modulation signal composed of both a single sideband carrier suppressed signal and a carrier signal; and a receiver including an amplitude limiter which removes amplitude variation of the received SSB amplitude modulation signal, a demodulator connected to an output of said amplitude limiter to demodulate the SSB amplitude modulation signal, and a lineariser to cancel out distortions contained in the demodulated signal, characterized in that the demodulator comprises a frequency detector; in that the receiver further includes an equalizer, which is composed of an integrator, connected to an output of said frequency detector to compensate a frequency response of a frequency-detected signal; and in that the lineariser comprises a Hilbert transformer providing a Hilbert transform of an input signal, a first multiplier providing a product of the output of said Hilbert transfer and the input signal, a cuber providing a cube of the input signal, a second multiplier providing a product of the outputs of said Hilbert transformer and the first multiplier, a first attenuator attenuating the output of the cuber with an attenuation factor of 1/6, a second attenuator attenuating an output of said multiplier with an attenuation factor of $\frac{1}{2}$, and a summation circuit summing up the input signal, outputs of said first multiplier, and said first and second attentuators.

Embodiments of the invention will now be described, by way of example, with reference to the accompanying drawings, in which
Figure 1 is a block schematic diagram of an SSB communication system according to the invention;
Figure 2 is a block schematic diagram of a lineariser forming part of the system of Figure 1;
Figure 3 is a block schematic diagram of another form of lineariser;
Figure 4 is a block schematic diagram of a further form of lineariser;
Figure 5 is a block schematic diagram of a selective amplification circuit for carrier component amplification;
Figure 6 is a block schematic diagram of a pre-distortion circuit in a transmitter portion of the system; and
Figure 7 is a block diagram of a diversity receiver circuit of an SSB communication system.

The principle of the present invention is based upon the fact that signals expressed only in real simple zeros can be fed into an amplitude limiter. When an SSB signal modulated by a band-limited baseband signal is accompanied by a carrier, whose level is higher than that of the SSB signal, this SSB signal is called a full-carrier SSB.

The theoretical analysis of the present invention is first presented. A full carrier SSB signal can be expressed by

$$S(t) = (1 + mg(t))\cos\omega_c t + m\widehat{g}(t)\sin\omega_c t, \qquad (1)$$

where m is a modulation index and g(t) is a real information signal extending the frequency range, for instance, of between 300 Hz and 3.0 kHz. $\widehat{g}(t)$ (= H(g(t))) is a Hilbert transform of g(t). $\omega_c$ (= $2\pi f_c$) is the angular frequency of a sinusoidal carrier signal. Equation (1) can be rearranged as,

$$S(t) = A\cos\theta(t),$$

where

$$\theta(t) = \omega_c t - w(t)$$

$$w(t) = \arctan\{m\widehat{g}(t)/(1 + mg(t))\}$$

$$A = \sqrt{(1 + mg(t))^2 + (m\widehat{g}(t))^2}.$$

When both m and g(t) are constrained such that

$$0 < m \leq l \text{ and } -1 \leq g(t) \leq 1,$$

4

S(t) can be expressed only in real simple zeros. Therefore, S(t) can be safely applied to the amplitude limiter.

Following amplitude limiting in the receiver, a frequency detector (frequency discriminator) performs the operation,

$$v(t) = \theta'(t)/2\pi - f_c$$
$$= -w'(t)/2\pi.$$

Then,

$$w'(t) = (d/dt)\{arctan(m\hat{g}(t)/(1+mg(t)))\}$$
$$= \{m\hat{g}'(t)+m^2(\hat{g}'(t)g(t)-\hat{g}(t)g'(t))\}/\{1+2mg(t)+m^2(g^2(t)+\hat{g}^2(t))\}$$
$$= m\hat{g}'(t) - m^2(\hat{g}(t)g(t)+\hat{g}(t)g'(t))$$
$$+ m^3(\hat{g}'(t)g^2(t)-\hat{g}'(t)\hat{g}^2(t)+2g(t)g'(t)\hat{g}(t)) + O(m^4)$$
$$= m\hat{g}'(t) - m^2(g(t)\hat{g}(t))'$$
$$+ m^3\{(g^2(t)\hat{g}(t))'-(\hat{g}^3(t))'/3\} + O(m^4), \qquad (2)$$

where the prime symbol implies differentiation.

In a frequency response equalization process, an integrator is used, the output of the same is given as,

$$v_1(t) = m\hat{g}(t) - m^2\hat{g}(t)g(t) + m^3(g^2(t)\hat{g}(t)-\hat{g}^3(t)/3) + O(m^4). \qquad (3)$$

When the constant can be omitted without the loss of generality, the first term on the right hand side of Eq.-(3) corresponds to the information signal. Other terms are the higher order products of g(t), which should be cancelled out by the use of linearizer circuit.

The relation between the integrator and - 6 dB/octave response equalizer will be clarified as follows:

It is possible to compensate the frequency response with a - 6 dB/octave response equalizer, whose function can be explained mathematically,

$$g'(t) = -2\pi\hat{g}(t) \text{ and } \hat{g}'(t) = 2\pi g(t),$$

which can be easily reduced by using the relation between the differentiation of sinusoidal functions and Hilbert transforms, because g(t) is Fourier transformable. Thus, the demodulated signal is equalized as,

$$v_2(t) = mg(t) - m^2(g^2(t)-\hat{g}^2(t))/2 + m^3(g^3(t)-3g(t)\hat{g}^2(t))/3 + O(m^4). \qquad (4)$$

The Hilbert transform of $v_1(t)$ can be written as,

$$\hat{v}_1(t) = -mg(t) + m^2(g^2(t)-\hat{g}^2(t))/2$$
$$+ m^3(g(t)\hat{g}^2(t)-g^3(t)) + O(m^4)$$
$$= -v_2(t), \qquad (5)$$

which corresponds to Eq. (4) except for the coefficient of - 1. Here, the following relations are utilized,

$$H(\hat{g}(t)) = -g(t)$$

$$H(g(t)\hat{g}(t)) = -(g^2(t)-\hat{g}^2(t))/2$$

$$H(\hat{g}^3(t)-3g^2(t)\hat{g}(t)) = g^3(t)-3g(t)\hat{g}^2(t).$$

Next, the following equation is useful for explaining how to fabricate a linearizer by using the existing devices, that is,

$$u(t) = v_1(t) - v_1(t)\hat{v}_1(t) + v_1(t)\hat{v}_1^2(t)/2 - v_1^3(t)/6. \qquad (6)$$

Substituting Eqs. (3) and (5) into Eq. (6), that equation becomes,

$$u(t) = m\hat{g}(t) + O(m^4). \qquad (7)$$

which indicates that the second and third order products of g(t) are completely deleted.

The Hilbert transform of u(t) is given as

$$\hat{u}(t) = -mg(t) + 0(m^4)$$

As the human ears cannot distinguish between g(t) and $\hat{g}(t)$, the Hilbert transformer after the lineariser is not necessary when voice signals are applied. However, when data signals, such as MODEM signals, are applied, the Hilbert transformer is necessary to prevent the generation of distortion. This is because the difference between g(t) and $\hat{g}(t)$ is apparent for data signals.

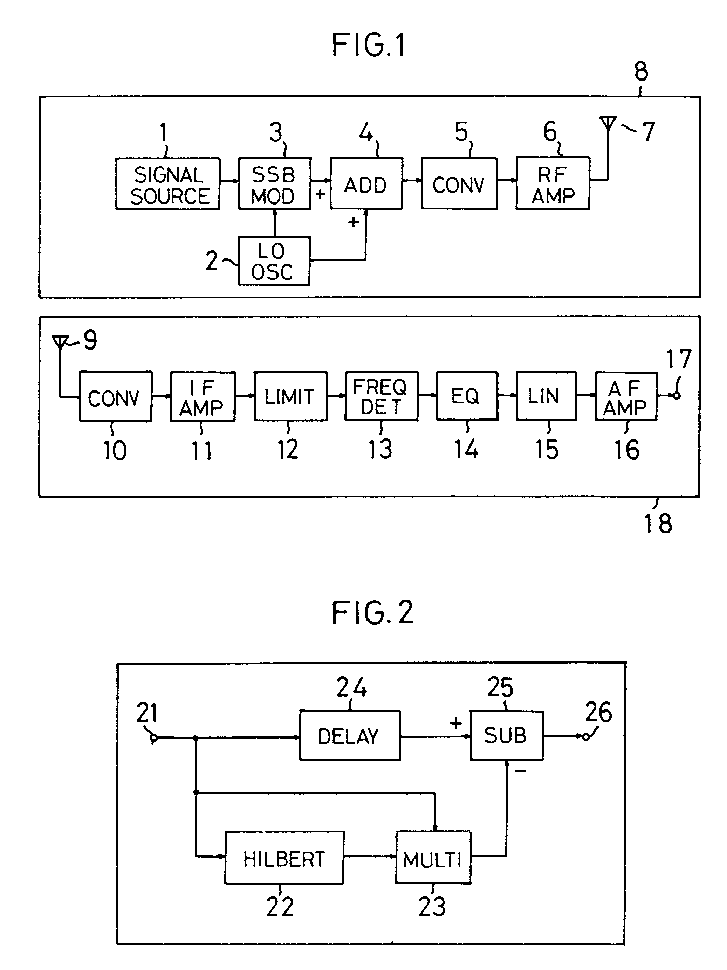

Figure 1 shows a block diagram of a system according to the present invention. The system comprises a signal source 1, a local oscillator 2, an SSB modulator 3, an adder 4, an up-converter 5 for converting the frequency of the output of the adder 4 to radio-frequency, an RF (radio frequency) amplifier 6 and a transmitting antenna 7, together forming a transmitter portion 8 of the system.

The system further comprises a receiving antenna 9, a down-converter 10 for converting the frequency from RF to IF (intermediate frequency), an IF amplifier 11, an amplitude limiter 12 for removing amplitude variations of a received SSB signal, a frequency detector 13, a frequency-response equaliser 14, a lineariser 15 for cancelling distortions contained in the demodulated signal, an AF (audio frequency) amplifier 16, and an output terminal 17, together forming a receiver portion 18 of the system.

In the transmitter portion 8 of the system, voice signals in a frequency range of, for example 300Hz to 3.0kHz are provided from the signal source 1. The voice signals are fed to the SSB modulator 3, which is also fed with an IF carrier signal produced by a local oscillator 2. Thus, a single-sideband suppressed-carrier signal is generated at the output of the SSB modulator 3 by using, for example, the phasing method.

The output of the SSB modulator 3 is fed to the adder 4, where it is combined with the carrier (the signal from the local oscillator 2). The output of the adder 4 feeds the up-converter 5 which converts the frequency to the RF region. The RF amplifier 6 amplifies the RF signal, which is radiated through the air by the transmitting antenna 7.

In the receiver portion 18 of the system, the signal received by the receiving antenna 9 feeds the down-converter 10, which converts the frequency from RF to IF. Then, in order to compensate for the radio transmission path loss, the IF signal is amplified in the IF amplifier 11 up to the level where the demodulation process can be performed. The output of the IF amplifier 11 feeds the amplitude limiter 12, which removes amplitude variations caused by fading. If the level of the received carrier is lower than that of the SSB signal, the carrier component must be amplified to satisfy the conditions for a full-carrier SSB signal, before the signal is applied to the amplitude limiter 12. The output of the amplitude limiter 12 is applied to the frequency detector 13 to provide demodulated voice signals which, in turn, feed the equaliser 14 which compensates the frequency response in the bandwidth of interest. There are two possible ways of compensating, namely an integrator and a -6 dB/octave response equaliser, which are, for convenience, referrred to herein as 14a and 14b, respectively. The output of the equaliser 14 is fed to the lineariser 15 in order to cancel out distortion generated in the demodulation process. The output of the lineariser 15 is fed through the AF amplifier 16 to the output terminal 16.

Figure 2 is a block diagram of the lineariser 15, when the frequency detector 13 and the integrator 14a are employed. The lineariser comprises an input terminal 21, a Hilbert transformer 22, a multiplier 23, a delay circuit 24, a subtractor 25, and an output terminal 26.

Equation (3) is useful for explaining how to cancel out the second order product of g(t). The apparatus shown in Figure 2 compensates for the second order product of g(t). The input terminal 21 is connected to the output of the frequency detector 13. The signal at the input terminal 21 which feeds the Hilbert transformer 22 is denoted by $m\widehat{g}(t) - m^2 g(t)\widehat{g}(t) + O(m^3)$. The output of the Hilbert transformer 22 is multiplied by the signal derived from the input terminal 21, so that the second-order product of $- m^2 g(t)\widehat{g}(t) + O(m^3)$ is obtained at the output of the multiplier 23. The signals at the output of the delay circuit 24 and the multiplier 23 are applied to the subtractor 25 to delete the second-order product of g(t). The delay circuit 24 can then be adjusted so that the distortion at the output terminal 26 is minimised. This procedure can be performed, for example, by using a spectrum analyser.

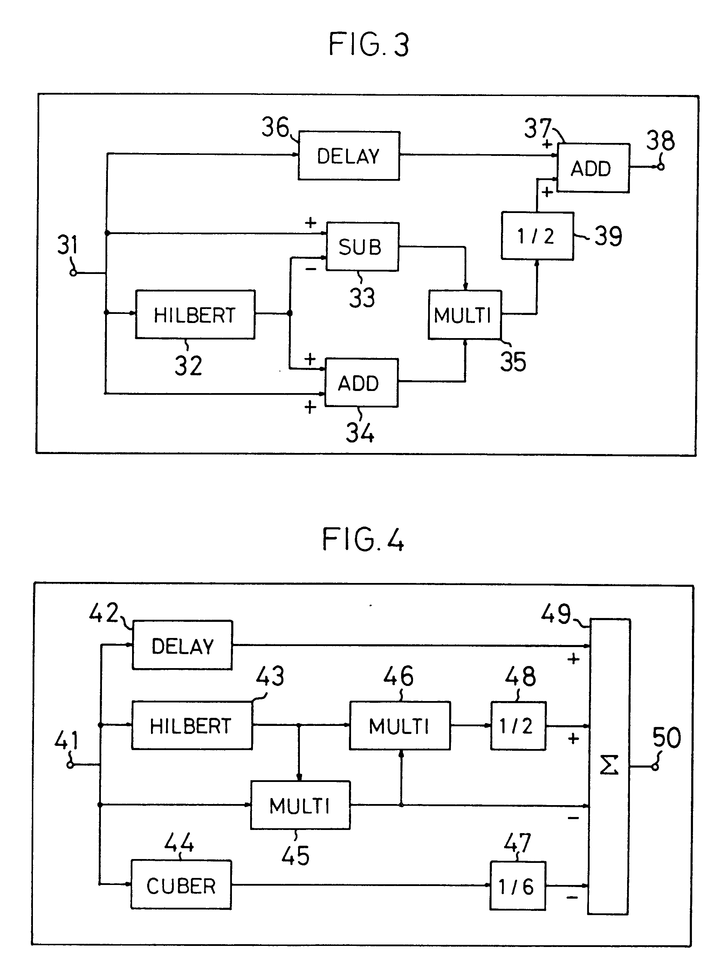

Figure 3 shows another form of the lineariser 15, which comprises an input terminal 31, a Hilbert transformer 32, a substractor 33, an adder 34, a multiplier 35, a delay circuit 36, an adder 37, an output terminal 38 and an attenuator 39 for halving the signal level.

The lineariser depicted in Figure 3 is applicable when the frequency detector 13 is accompanied by a -6 dB/octave response equaliser 14b. The operation of the lineariser is governed by equation (4).

The signal at the input terminal 31, which is the output of the frequency equaliser 14, is applied to the Hilbert transformer 32, the subtractor 33, the adder 34 and the delay circuit 36. The output of the Hilbert transformer 32 is applied to the subtractor 33 and the adder 34. The product signal which is derived from the multiplier 35 is $m^2(g(t)-\widehat{g}(t))(g(t)+\widehat{g}(t)) + O(m^3)$. This signal is fed through the attenator 39 to the adder 37 where it is combined with the output of the delay circuit 36. The delay time should be adjusted in order to cancel out the second-order product of g(t). The delay circuit 36 is useful to compensate the total delay time arising from the Hilbert transformer 32, the subtractor 33, the adder 34 and the multiplier 35. Then the signal at the output of the adder 37 is $mg(t) + O(m^3)$ which is free from the second-order product of g(t).

Figure 4 shows another form of the lineariser 15, which comprises an input terminal 41, a delay circuit 42, a Hilbert transformer 43, a cuber 44, multipliers 45 and 46, attenuators 47 and 48, a summation circuit 49 and an output terminal 50.

The signal at the input terminal 41, which is the output of the frequency detector 13, is denoted by $v_1(t)$ as formulated in equation (3). The input signal is distributed to the delay circuit 42, the Hilbert transformer 43, the cuber 44 and the multiplier 45. The output of the Hilbert transformer is then $\widehat{v}_1(t)$, which feeds the multipliers 45 and 46. The signals of the output of the multipliers 45 and 46 are $v_1(t)\widehat{v}_1(t)$ and $v_1(t)\widehat{v}_1^2(t)$, respectively. The output of the multiplier 46 is connected to the attenuator 48, the attenuation factor of which is 1/2. The cuber 44 provides the cube of $v_1(t)$, and this is fed to the attenuator 47 which has an attenuation factor of 1/6. The signals derived from the delay circuit 42, the multiplier 45 and the attenuators 47 and 48 are gathered at the summation circuit 49, the rule of which, as shown in the drawing, is governed by equation (6). The delay time of the delay circuit 42 should be adjusted to cancel out the second and third order products of g(t). Then, the signal at the output terminal is $m\widehat{g}(t) + O(m^4)$ which indicates that the residual distortion level is very small when m < 1.

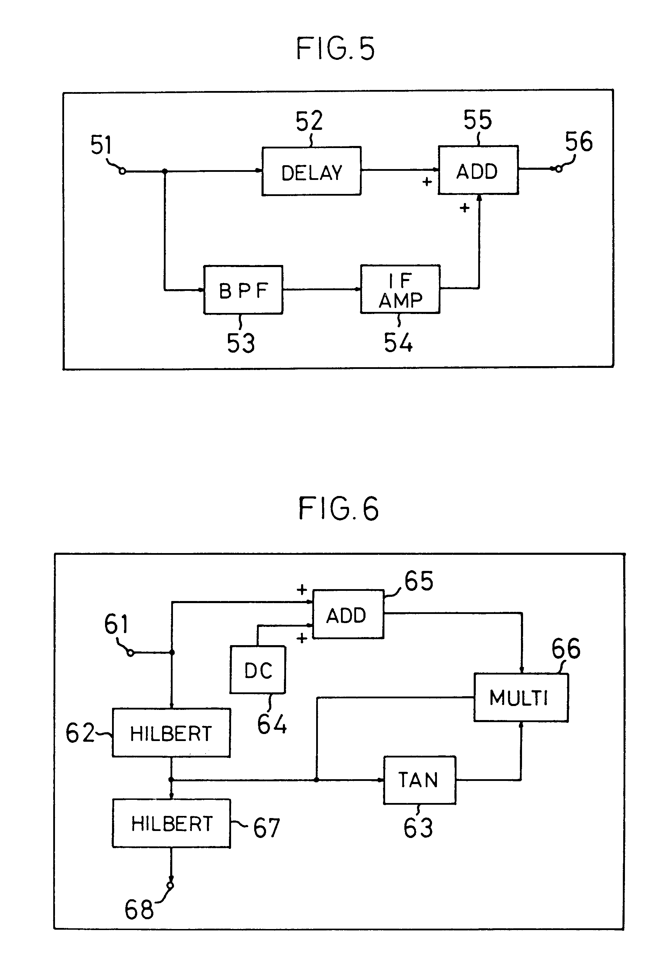

Figure 5 shows a modification of the present invention. In order to improve the transmission efficiency of the transmitted signals, it is necessary to reduce the level of the carrier as compared with that of the SSB signals. However, this signal cannot be directly applied to the amplitude limiter, because the signal is not a full-carrier SSB signal. Prior to the amplitude limiter, the selective amplification circuit of the carrier component depicted in Figure 5 is required to regenerate a full-carrier SSB signal from the received signal. The circuit depicted in Figure 5 is inserted between the IF amplifier 11 and the amplitude limiter 12 shown in Figure 1. The circuit comprises an input terminal 51, a delay circuit 52, a bandpass filter 53, an IF amplifier 54, an adder 55 and an output terminal 56.

The signal at the input terminal 51, which is the output of the IF amplifier 11, is fed to the delay circuit 52 and the bandpass filter 53. The carrier component whose frequency is converted to the IF region is extracted by the bandpass filter 53. The output of the bandpass filter 53 is amplified in the IF amplifier 54 up to a sufficiently high level to satisfy the condition of a full-carrier SSB signal. The signal at the output of the IF amplifier 54 is combined with the output of the delay circuit 52 at the adder 55. Then, the signal at the output terminal 56 can be safely introduced to the amplitude limiter 12.

Figure 6 shows a modification of the present invention, where a modulating signal is pre-distorted in the transmitter portion of the system, so that the lineariser circuit depicted in Figures 2, 3 or 4 is not necessary in the receiver portion of the system. When the following relation is satisfied, that is,

$$\arctan[m\widehat{g}(t)/(1 + mg(t))] = m\widehat{g}(t) \qquad (8)$$

the signal demodulated by the frequency detector and the equaliser does not produce any distortion. The left hand side of equation (8) is the signal demodulated by the frequency detector and the equaliser, and the right hand side of equation (8) is the Hilbert transform of the original information signal sent by the transmitter. Equation (8) is easily rearranged as

$$(1 + mg(t)\tan(m\hat{g}(t)) = m\hat{g}(t) \qquad (9)$$

which is convenient for fabricating a pre-distortion circuit by using the existing devices. When g(t), which is pre-distorted in keeping with the relation of equation (9), is fed to the SSB modulator 3, the detected signal always corresponds to the original information signal even though it is Hilbert-transformed.

The pre-distortion circuit is inserted between the signal source 1 an d the SSB modulator 3. In Figure 6, the circuit comprises an input terminal 61, a Hilbert transformer 62, a tangent function generator 63, a DC (direct current) source 64, an adder 65, a multiplier 66, a Hilbert transformer 67 and an output terminal 68. The signal at the input terminal 61, which is derived from the signal source 1, is fed to the Hilbert transformer 62 and the adder 65. By the use of the DC source 64, the adder 65 produces a signal 1 + mg-(t). The output of the Hilbert transformer 62 feeds both the tangent function generator 63 and the Hilbert transformer 67. The product of the output of the adder 65 and the tangent function generator 63 is produced by the multiplier 66. The signal at the output of the multiplier 66 is fed back to the input of the tangent function generator 63. The output of the Hilbert transformer 67 then comprises the pre-distorted signal. This output is fed to the output terminal 68.

The present invention may be combined with some of the conventional communication techniques, such as a syllabic compandor, a diversity reception system and/or a smearing filter, etc.

A syllabic compandor is available to suppress harmful noises such as thermal noise, man-made noise and/or click noise. In the transmitter portion, a compressor is introduced between the signal source 1 and the SSB modulator 3 shown in Figure 1. The compressor (not shown) compresses the signal level which is lower than a reference level. Then, the dynamic range between the highest and the lowest signal level is reduced. The compressed signal is fed to the SSB modulator 3 and is transmitted. In the receiver portion, an expandor (not shown) is introduced between the lineariser 15 and the AF amplifier 16 so that the received compressed signal is expanded. When noise is superimposed on the signal, it is reduced in the expansion process. The SNR (signal-to-noise ratio) is improved as compared with the case where the syllabic compandor is not introduced.

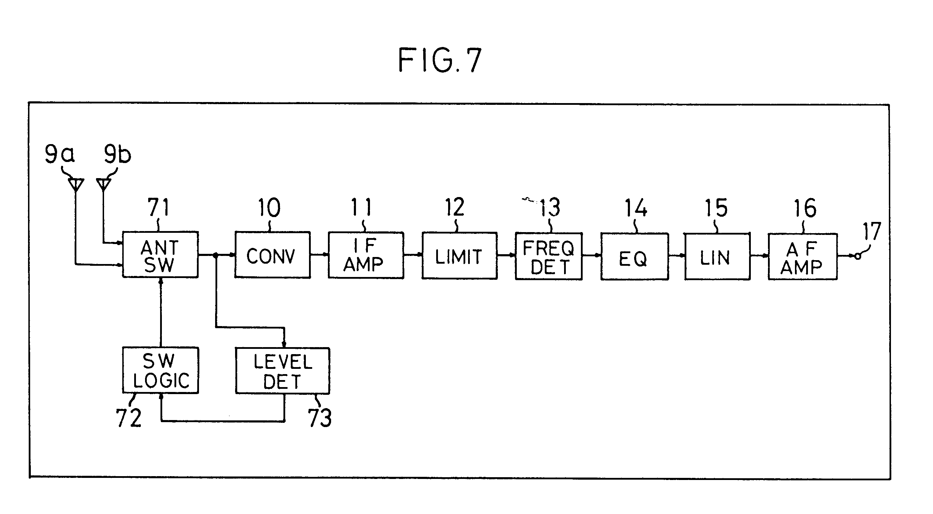

Figure 7 shows a modification of the invention. Diversity systems provide the most promising scheme for elimination of the effects of fading. In Figure 7, the reference numerals 10 to 17 represent the same integers as in Figure 1. The cicuit further comprises receiving antennas 9a and 9b, an antenna switch 71, a switch logic circuit 72 and a level detector 73. The instantaneous envelope of the signal received by the receiving antena 9a, for example, is monitored by the level detector 73. If it falls below a predetermined threshold, the antenna switch 71 is activated by the switch logic circuit 72, so that it selects the second antenna, 9b. If the signal from the second antenna is above the threshold, switching ceases. If the signal in the second antenna is also subject to fading, we can revert to the first antenna. A signal in which amplitude fading is substantially eliminated is derived from the output of the antenna switch 71.

It should be appreciated that there are many diversity techniques available, for instance space diversity, frequency diversity, time diversity, etc. The diversity technique is also effective when introduced to the transmitter instead of the receiver.

A further modification of the present invention is the use of a smearing filter for improving the SNR of the detected signal. Smearing and desmearing filters (not shown) are placed before the modulator and after the demodulator, respectively. Both of these filters then operate on the information signal, and the filters are usually chosen to be complementary so that, in the ideal case, the net effect upon the information signal is merely a delay.

During severe fading, most of the amplitude information in conventional SSB signalling may be wiped out. In the present system, real zeros play an important role for conveying the information, just as in FM. Zeros of the signal possess great immunity to noise and interference. The above-mentioned pre-distortion circuit, a syllabic compandor, a diversity system, and/or a smearing filter are still useful for combatting noise encountered in a modible radio transmission path.

As described above in detail, the present invention possesses the following particular effects and is particularly applicable to use in mobile radio communication systems.

(a) As an SSB modulation method is employed, the necessary radio bandwidth is comparable to the information bandwidth.

(b) As an amplitude limiter is introduced into the receiver section, degradations caused by fading and/or man-made noise encountered in the mobile radio environments are removed.

(c) As a conventional SSB transmitter and a PM receiver may be used merely by inserting a lineariser prior to the AF amplifier, there is no difficulty in manufacturing the transceiver of the present invention.

**Claims**

1. A single sideband (SSB) communication system comprising a transmitter (8) transmitting an SSB amplitude modulation signal composed of both a single sideband carrier suppressed signal and a carrier signal; and a receiver (18) including an amplitude limiter (12) which removes amplitude variations of the received SSB amplitude modulation signal, a demodulator (13) connected to an output of said amplitude limiter (12) to demodulate the SSB amplitude modulation signal, and a lineariser (15) to cancel out distortions contained in the demodulated signal, characterized in that the demodulator is a frequency detector (13); in that the receiver (18) further includes, an equalizer (14), which is composed of an integrator, connected to an output of said frequency detector (13) to compensate a frequency response of a frequency-detected signal; and in that the lineariser (15) is connected to an output of said equaliser (14) and comprises a Hilbert transformer (22) providing a Hilbert transform of an input signal from said frequency detector (13), a multiplier (23) providing a product of said Hilbert transformer (22) output and the input signal, and a subtractor (25) subtracting a second order product, derived from said multiplier, from the input signal.

2. An SSB communication system comprising a transmitter (8) transmitting an SSB amplitude modulation signal composed of both a single sideband carrier suppressed signal and a carrier signal; and a receiver (18) including an amplitude limiter (12) which removes amplitude variations of the received SSB amplitude modulation signal, a demodulator (13) connected to an output of said amplitude limiter (12) to demodulate the SSB amplitude modulation signal, and a lineariser (15) to cancel out distortions contained in the demodulated signal, characterized in that the demodulator (13) is a frequency detector; in that the receiver (18) further includes a - 6dB/octave response equalizer (14), connected to an output of said frequency detector (13) to compensate a frequency response of a frequency-detected signal; and in that the lineariser (15) connected to an output of said equaliser comprises a Hilbert transformer (32) providing a Hilbert transform of an input signal from said frequency detector (13), in adder (34) and a subtractor (33) providing a sum and difference between the input signal and the output of said Hilbert transformer (32), respectively, a multiplier (35) providing a product of the output signals of said adder and subtractor, an attenuator (39) halving the output of said multiplier and an adder (37) providing the sum of the output of said attenuator (39) and the input signal.

3. An SSB communication system comprising a transmitter (8) transmitting an SSB amplitude modulation signal composed of both a single sideband carrier suppressed signal and a carrier signal; and a receiver (18) including an amplitude limiter (12) which removes amplitude variation of the received SSB amplitude modulation signal, a demodulator (13) connected to an output of said amplitude limiter (12) to demodulate the SSB amplitude modulation signal, end a lineariser (15) to cancel out distortions contained in the demodulated signal, characterized in that the demodulator comprises a frequency detector; in that the receiver (18) further includes an equalizer (14), which is composed of an integrator, connected to an output of said frequency detector (13) to compensate a frequency response of a frequency-detected signal; and in that the lineariser (15) comprises a Hilbert transformer providing a Hilbert transform of an input signal, a first multiplier (45) providing a product of the output of said Hilbert transformer and the input signal, a cuber (44) providing a cube of the input signal, a second multiplier (46) providing a product of the outputs of said Hilbert transformer (43) and the first multiplier (45), a first attenuator (47) attenuating the output of the cuber with an attenuation factor of 1/6, a second attenuator (48) attenuating an output of said multiplier with an attenuation factor of $\frac{1}{2}$, and a summation circuit (49) summing up the input signal, the outputs of said first multiplier (45), and the outputs of said first and second attentuators (47,48).

4. An SSB communication system according to any preceding claim wherein the amplitude limiter (12) is used to extract the phase component of the received SSB signal.

5. An SSB communication system according to any preceding claim wherein prior to said amplitude limiter (12) in the receiver (18), a selective amplifier is connected in order to selectively amplify a carrier component where a level of the carrier is greater than that of the SSB amplitude modulation signal, said selective amplifier comprising a bandpass filter (53) exclusively extracting the carrier component, an amplifier (54) amplifying an output of said bandpass filter, a delay circuit (52) compensating a delay time generated from both said bandpass filter (53), and amplifier (54), and an adder (55) summing up outputs of said amplifier and delay circuit (52).

6. An SSB communication system according to any preceding claim wherein a diversity communication system is installed into at least one of said transmitter (8) and said receiver (18).

7. An SSB communication system according to any preceding claim wherein there are provided a syllabic compandor in a a transceiver of said SSB communication system, a compressor for said transmitter (8) and an expandor for said receiver (18).

8. An SSB communication system according to any preceding claim wherein there are provided a smearing filter in a transceiver of said SSB communication system, a smearing filter for said transmitter (8) and a desmearing filter for said receiver (18).

**Revendications**

1. Système de communication à bande latérale simple (SSB) comportant un émetteur (8) émettant un signal modulateur d'amplitude SSB comptant à la fois un signal supprimé de porteur de bande latérale simple et un signal porteur; et un récepteur (18) muni d'un limiteur d'amplitude (12) éliminant les variations d'amplitude du signal ainsi reçu de modulation d'amplitude en bande latérale simple, un démodulateur (13) relié à une sortie dudit limiteur d'amplitude (12) pour démoduler le signal de modulation d'amplitude SSB, et un linéarisateur (15) pour éliminer les distorsions retenues par le signal démodulé, **caractérisé en ce que** le démodulateur est un détecteur de fréquence (13); **en ce que** le récepteur prévoit aussi un égaliseur (14) qui consiste d'un intégrateur, relié à une sortie dudit détecteur de fréquence (13) pour compenser la réponse de fréquence d'un signal de fréquence captée; **et en ce que** le linéarisateur (15) est relié à une sortie dudit égaliseur (14) et compte un transformateur Hilbert (22) apportant un signal d'entrée transformé Hilbert d'entrée dudit détecteur de fréquence (13), un multiplicateur (23) amenant le produit dudit signal d'entrée et sortie dudit transformateur Hilbert (22), et un soustracteur (25) qui retranche du signal d'entrée un produit de deuxième ordre dérivé dudit multiplicateur.

2. Système de communication à bande latérale simple (SSB) ayant un émetteur (8) émettant un signal modulateur d'amplitude SSB prévoyant à la fois un signal supprimé de porteur de bande latérale simple et un signal porteur; et un récepteur (18) comportant un limiteur d'amplitude (12) éliminant les variations d'amplitude du signal ainsi reçu de modulation d'amplitude en bande latérale simple, un démodulateur (13) relié à une sortie dudit limiteur d'amplitude (12) pour démoduler le signal de modulation d'amplitude SSB et un linéarisateur (15) pour éliminer les distorsions retenues par le signal démodulé, **caractérisé en ce que** le démodulateur est un détecteur de fréquence (13); **en ce que** le récepteur (18) prévoit aussi un égalisateur (14) de réponse -6dB/octave relié à une sortie dudit détecteur de fréquence (13) compensateur de la réponse de fréquence d'un signal de fréquence captée; **et en ce que** le linéarisateur (15) relié à une sortie dudit égalisateur (14) compte un transformateur Hilbert (32) apportant un signal d'entrée transformé Hilbert d'entrée dudit détecteur de fréquence (13), un totalisateur (34) et un soustracteur (33) assurant le cumul et la différence respectivement entre le signal entrée et sortie dudit transformateur Hilbert (32), un multiplicateur apportant le produit des signaux de sortie desdits totalisateur et soustracteur, un atténuateur (39) divisant de moitié la sortie dudit multiplicateur et un totalisateur (37) apportant le cumul de sortie dudit atténuateur (39) et du signal d'entrée.

3. Système de communication à bande latérale simple (SSB) ayant un émetteur (8) émettant un signal modulateur d'amplitude SSB à la fois composé du signal supprimé de porteur de bande latérale simple et d'un signal porteur; et un récepteur (18) avec limiteur d'amplitude (12) éliminant la variation d'amplitude du signal ainsi reçu de modulation d'amplitude en bande latérale simple, un démodulateur (13) relié à une sortie du limiteur d'amplitude (12) pour démoduler le signal de modulation d'amplitude SSB, et un linéarisateur (15) pour annuler les distorsions retenues par le signal démodulé **caractérisé en ce que** le démodulateur prévoit un détecteur de fréquence; **en ce que** le récepteur prévoit également un égalisateur (14) consistant d'un intégrateur, relié à une sortie dudit détecteur de fréquence (13) pour compenser la réponse de fréquence d'un signal de fréquence captée; **et en ce que** le linéarisateur (15) prévoit un transformateur Hilbert apportant un signal d'entrée transformé Hilbert, un premier multiplicateur (45) apportant un produit de sortie dudit transformateur Hilbert et du signal d'entrée, un dispositif de mise au cube (44) assurant le cube du signal d'entrée, un deuxième multiplicateur (46) apportant le produit des sorties de transformateur Hilbert (43) et du premier multiplicateur (45), un premier atténuateur (47) atténuant d'un facteur d'1/6 la sortie du dispositif de mise au cube, un deuxième atténuateur (48) atténuant une sortie dudit multiplicateur avec un facteur d'atténuation d'$\frac{1}{2}$, et un circuit (49) effectuant la totalisation du signal d'entrée, les sorties premier dudit multiplicateur (45) et les sorties desdits premier et deuxième atténuateurs (47,48).

4. Système de communication à bande latérale simple (SSB) selon l'une ou l'autre des revendications précédentes dont le limitateur d'amplitude (12) est exploitépour extraire l'élément de phase du signal SSB ainsi reçu.

5. Système de communication à bande latérale simple (SSB) selon l'une ou l'autre des revendications précédentes dont avant ledit limitateur d'amplitude (12) du récepteur (18), un amplificateur sélectif est relié pour l'amplification sélective d'un élément porteur lorsque le niveau du porteur est supérieur à celui du signal modulateur d'amplitude SSB, ledit amplificateur ayant un filtre passe-bande (53) pour l'extraction exclusive de l'élément porteur, une sortie du filtre passe-bande étant amplifiée par l'amplificateur(54), un circuit compensateur(52) effectuant la compensation du délai relevant à la fois desdits filtre passe-bande (53) et amplificateur(54) et un totalisateur(55) de cumul de sorties d'amplificateur et de circuit compensateur (52).

6. Système de communication à bande latérale simple (SSB) selon l'une ou l'autre des revendications précédentes dont un système de communication de diversité est prévu en un seul au minimum desdits émetteur (8) et récepteur (18).

7. Système de communication à bande latérale simple (SSB) selon l'une ou l'autre des revendications précédentes qui prévoit un compresseur/expandeur syllabique d'émetteur/récepteur de système de communication SSB, dont un compresseur pour ledit émetteur (8) et un expandeur pour ledit récepteur.

8. Système de communication à bande latérale simple (SSB) selon l'une ou l'autre des revendications précédentes, qui prévoit un filtre de rémanence d'émetteur/récepteur de système de communication SSB, un filtre de rémanence audit émetteur (8) et un filtre éliminant la rémanence audit transmetteur (18).

**Patentansprüche**

1. Einseitenband(ESB)-Kommunikationssystem mit einem Sender (8), der ein ESB-Amplitudenmodulationssignal aussendet, das aus einem Signal mit unterdrücktem Einseitenbandträger und einem Trägersignal zusammengesetzt ist; und mit einem Empfänger (18), der einen Amplitudenbegrenzer (12), der Amplitudenänderungen des empfangenen ESB-Amplitudenmodulationssignals entfernt, einen Demodulator (13), der am Ausgang des Amplitudenbegrenzers (12) angeschlossen ist, um das ESB-Amplitudenmodulationssignal zu demodulieren, und einen Linearisierer (15) zum Beseitigen von im Demodulationssignal enthaltenen Verzerrungen aufweist, dadurch gekennzeichnet, daß der Demodulator ein Frequenzdetektor (13) ist; daß der Empfänger (18) ferner einen Entzerrer (14) aufweist, der aus einem Integrator besteht, der am Ausgang des Frequenzdetektors (13) angeschlossen ist, um den Frequenzgang des Ausgangssignals des Frequenzdetektors zu kompensieren; und daß der Linearisierer (15) am Ausgang des Entzerrers (14) angeschlossen ist und einen Hilbert-Transformator (22), der eine Hilbert-Transformation des Ausgangssignals des Frequenzdetektors (13) bewirkt, einen Multiplizierer (23), der das Produkt aus dem Ausgangssignal und dem Eingangssignal des Hilbert-Transformators (22) bildet, und einen Subtrahierer (25), der ein Produkt zweiter Ordnung, das durch den Multiplizierer gebildet wird, vom Eingangssignal subtrahiert, aufweist.

2. ESB-Kommunikationssystem mit einem Sender (8), der ein ESB-Amplitudenmodulationssignal aussendet, das aus einem Signal mit unterdrücktem Einseitenbandträger und einem Trägersignal zusammengesetzt ist; und mit einem Empfänger (18), der einen Amplitudenbegrenzer (12), der Amplitudenänderungen des empfangenen ESB-Amplitudenmodulationssignals entfernt, einen Demodulator (13), der am Ausgang des Amplitudenbegrenzers (12) angeschlossen ist, um das ESB-Amplitudenmodulationssignal zu demodulieren, und einen Linearisierer (15) zum Beseitigen von im Demodulationssignal enthaltenen

11

Verzerrungen aufweist, dadurch gekennzeichnet, daß der Demodulator ein Frequenzdetektor (13) ist; daß der Empfänger (18) ferner einen 6dB/Oktave-Frequenzgang-Entzerrer (14) aufweist, der an einem Ausgang des Frequenzdetektors (13) angeschlossen ist, um den Frequenzgang des Frequenzdetektor-Ausgangssignals zu kompensieren; und daß der am Ausgang des Entzerrers angeschlossene Linearisierer (15) aufweist: einen Hilbert-Transformator (32), der eine Hilbert-Transformation des Ausgangssignals des Frequenzdetektors (13) bewirkt, einen Addierer (34) und einen Subtrahierer (33), die jeweils die Summe und die Differenz von Eingangs- und Ausgangssignal des Hilbert-Transformators (32) bilden, einen Multiplizierer (35), der ein Produkt aus den Ausgangssignalen des Addierers und des Subtrahierers bildet, ein Dämpfungsglied (39), das das Ausgangssignal des Multiplizierers und eines Addierers (37), der die Summe des Ausgangssignals des Dämpfungsgliedes (39) und des Frequenzdetektors bildet, halbiert.

3. ESB-Kommunikationssystem mit einem Sender (8), der ein ESB-Amplitudenmodulationssignal aussendet, das aus einem Signal mit unterdrücktem Einseitenbandträger und einem Trägersignal zusammengesetzt ist; und mit einem Empfänger (18), der einen Amplitudenbegrenzer (12), der Amplitudenänderungen des empfangenen ESB-Amplitudenmodulationssignals entfernt, einen Demodulator (13), der am Ausgang des Amplitudenbegrenzers (12) angeschlossen ist, um das ESB-Amplitudenmodulationssignal zu demodulieren, und einen Linearisierer (15) zum Beseitigen von im Demodulationssignal enthaltenen Verzerrungen aufweist, dadurch gekennzeichnet, daß der Demodulator einen Frequenzdetektor aufweist; daß der Empfänger (18) ferner einen Entzerrer (14) aufweist, der aus einem Integrator besteht, der am Ausgang des Frequenzdetektors (13) angeschlossen ist, um den Frequenzgang des Ausgangssignals des Frequenzdetektors zu kompensieren; und daß der Linearisierer (15) aufweist: einen Hilbert-Transformator, der eine Hilbert-Transformation mit einem Eingangssignal bewirkt, einen ersten Multiplizierer (45), der ein Produkt des Ausgangssignals des Hilbert-Transformators und des Eingangssignals bildet, einen Potenzierer (44), der die dritte Potenz des Eingangssignals bildet, einen zweiten Multiplizierer (46), der das Produkt der Ausgangssignale des Hilbert-Transformators (43) und des ersten Multiplizierers (45) bildet, ein erstes Dämpfungsglied (47), das das Ausgangssignal des Potenzierers mit einem Dämpfungsfaktor von 1/6 dämpft, ein zweites Dämpfungsglied (48), das das Ausgangssignal des Multiplizierers mit einem Dämpfungsfaktor von 1/2 dämpft, und eine Summierschaltung (49), die das Eingangssignal, die Ausgangssignale des ersten Multiplizierers (45) und die Ausgangssignale der beiden Dämpfungsglieder (47, 48) aufsummiert.

4. ESB-Kommunikationssystem nach einem der vorstehenden Ansprüche, bei dem der Amplitudenbegrenzer (12) zum Extrahieren der Phasenkomponente des empfangenen ESB-Signals verwendet wird.

5. ESB-Kommunikationssystem nach einem der vorstehenden Ansprüche, bei dem dem Amplitudenbegrenzer (12) im Empfänger (18) ein selektiver Verstärker vorgeschaltet ist, um eine Trägerkomponente selektiv zu verstärken, wenn der Pegel des Trägers größer als das ESB-Amplitudenmodulationssignal ist, wobei der selektive Verstärker aufweist: ein Bandpaßfilter (53), das ausschließlich die Trägerkomponente extrahiert, einen Verstärker (54), der ein Ausgangssignal des Bandpaßfilters verstärkt, eine Verzögerungsschaltung (52), der eine Verzögerungszeit kompensiert, die durch das Bandpaßfilter (53) und den Verstärker (54) bewirkt wird, und einen Addierer (55), der die Ausgangssignale des Verstärkers und der Verzögerungsschaltung (52) aufsummiert.

6. ESB-Kommunikationssystem nach einem der vorstehenden Ansprüche, bei dem ein Diversity-Kommunikationssystem in dem Sender (8) und/oder Empfänger (18) installiert ist.

7. ESB-Kommunikationssystem nach einem der vorstehenden Ansprüche, bei dem ein Silbenkompander in einem Senderempfänger des ESB-Kommunikationssystems, ein Kompressor für den Sender (8) und ein Expander für den Empfänger (18) vorgesehen sind.

8. ESB-Kommunikationssystem nach einem der vorstehenden Ansprüche, bei dem ein Verschmierungsfilter in einem Senderempfänger des ESB-Kommunikationssystems, ein Verschmierungsfilter für den Sender (8) und ein die Verschmierung rückgängig machendes Filter für den Empfänger (18) vorgesehen sind.

# FIG.1

# FIG.2

# FIG.3

# FIG.4

14

# FIG.5

# FIG.6

# FIG.7

EP 0 184 923 B1